# EUROPÄISCHE PATENTANMELDUNG

(11) **EP 1 754 753 A2**
(43) Veröffentlichungstag der Anmeldung: **21.02.2007**
(21) Anmeldenummer: 06016653.5
(22) Anmeldetag: 09.08.2006
(51) Int. Cl.: C08L 95/00

(54) **Niedertemperaturverfahren für Belagseinbau mit bitumenhaltigem Bindemittel**

(30) Priorität: 16.08.2005 CH 13412005
(71) Anmelder: GRISARD Bauprodukte Holding AG, 4057 Basel (CH)
(72) Erfinder: Nättorp, Anders, Dr., 4056 Basel (CH)
(74) Vertreter: Braun, André jr.

(57) **Zusammenfassung**

Zur Herstellung von Asphaltbelägen wird der Gehalt an wachsmodifiziertem Bindemittel so erhöht, dass dabei mindestens die gleiche Resistenz gegen Spurrinnenbildung wie mit unmodifizierten Bindemitteln bei gleichzeitig tieferer Verarbeitungstemperatur erzielt werden kann.

## Beschreibung

Die Erfindung betrifft ein Verfahren zur Herstellung und zum Einbau von Asphaltbelägen und einen für das Verfahren geeigneten Asphalt.

Unter dem Begriff Asphalt wird allgemein und für den Zweck dieser Beschreibung eine Mischung von Gesteinskörnungen (Splitt, Sand, Steinmehl etc.) mit Bitumen oder einem bitumenhaltigem Bindemittel verstanden (vgl. z.B. GESTRATA Gesellschaft zur Pflege der Strassenbautechnik mit Asphalt, Hrsg., Asphalthandbuch, Wien 2002).

Bitumen ist ein Gemisch aus höchst- bzw. nichtsiedenden Rohölkomponenten. Es besteht aus einer sehr grossen Zahl verschiedener homologer Gruppen von Kohlenwasserstoffen. Seine durchschnittliche Molmasse beträgt 500 - 5000 g/mol. Die Kohlenwasserstoffe können überwiegend folgenden Gruppen zugeordnet werden: n-Alkane, i-Alkane, Naphtene, Naphteno-Aromaten, Aromaten, hochmolekulare Aromaten. Die genaue chemische Zusammensetzung des Bitumens ist nicht bekannt. Je nach Rohölherkunft kann es sehr unterschiedlich zusammengesetzt sein.

Häufig werden Bitumina zur Erzielung spezieller Eigenschaften mit anderen Stoffen versetzt (modifiziertes Bitumen). Bekannt ist plymermodifiziertes Bitumen, dessen Erweichungspunkt durch Zugabe von Kunststoffen deutlich erhöht wird.

Andere Stoffe, die zur Beeinflussung der Eigenschaften des Bitumens und des mit ihm hergestellten Asphalts zugesetzt werden sind Industriewachse. Für den Zweck dieser Beschreibung werden unter Wachsen organische Verbindungen, mit einem Tropfpunkt über 85°C und einer Schmelzviskosität von kleiner als 10 Pas bei einer Temperatur 10°C höher als der Tropfpunkt verstanden.

Es gibt im Wesentlichen zwei Typen von Asphalt, nämlich Walzasphalt und Gussasphalt. Ein Asphalt ist ein Gemisch von mineralischen Gesteinskörnungen und Bindemittel. Für Walzasphalt ist der Hohlraumgehalt wichtig und in der Produktenorm vorgeschrieben. Dieser kann für eine Standardverdichtungsarbeit (EN12697-30) bei einer Standardtemperatur bestimmt werden und liegt typischerweise zwischen 2-5% für hohlraumarme Schichten und 4-7% für hohlraumreiche Schichten. Es ist bekannt, dass eine höhere Bindemitteldosierung tieferen Hohlraumgehalt ergibt. Dies bedeutet auch, dass mit einem höheren Bindemittelgehalt und weniger Verdichtungsarbeit und/oder tieferer Temperatur der gleiche Hohlraumgehalt erreicht werden kann. Für Gussasphalt ist die Verarbeitbarkeit wichtig. Diese kann mit Rührwiderstand gemessen werden und sinkt mit steigendem Bindemittelgehalt. Für sowohl Gussasphalt als Walzasphalt führt höherer Bindemittelgehalt im Allgemeinen zu schlechterer Resistenz gegen Spurrinnenbildung. Dies kann für Walzasphalt mit dem sog. Druckschwellversuch laut "TP-A-StB Teil: Einaxialer Druckschwellversuch- Bestimmung des Verformungsverhaltens von Walzasphalten bei Wärme" und für Gussasphalt mittels der sog. Stempeleindringtiefe (EN 12697-20) gemessen werden.

Asphalt, der bei niedriger Temperatur verarbeitbar, sog. Niedrigtemperaturasphalt (NT-Asphalt) ist bekannt und wurde entwickelt, um die CO2- und Kohlenwasserstoff- Emissionen beim Einbau und Sanierung von Strassenbelägen zu senken. Die bisher materialtechnisch erzielten Temperatursenkungen betragen etwa 10°C bis zu etwa 20°C gegenüber den früher üblichen Temperaturen von 160 bis 170°C. Ferner wurde durch intensivere Verdichtungsarbeit eine weitere Temperaturabsenkung von ca. 10°C möglich.

Gemäss dem heutigen Stand der Technik werden auch Wachse in Gussasphalt zugesetzt um die Verarbeitbarkeit zu verbessern. Wachsmodifizierte Bindemittel werden sowohl in Walzasphalt, als auch in Gussasphalt verwendet, um tiefere Verarbeitungstemperaturen zu erzielen. Die Bindemitteldosierung ist gleich wie ein nicht wachsmodifiziertes Bindemittel, oder allenfalls wird das Wachs zusätzlich zum normalen Bindemittel zugesetzt. In einige Fälle ist die Temperaturabsenkung vernachlässigbar.

Wenn Wachse zum Bindemittel zugegeben werden, erhöht sich der Erweichungspunkt (EN 1427) des Bindemittels. Ein höherer Erweichungspunkt bedeutet eine bessere Resistenz gegen Spurrinnenbildung. Zudem haben wachsversetzte Bindemittel bei der Verarbeitungstemperatur eine Viskosität, die tiefer oder wenig höher als das Ursprungsbindemittel ist. Der wesentliche Unterschied zwischen Wachsbindemittel und unmodifiziertem Bindemittel ist also, dass Wachsbindemittel ein höheres Verhältnis Erweichungspunkt/log (Viskosität bei 150°C in mPas) haben. Das heisst, dass die Asphalte ein besseren Spurrinnenresistenz/Verarbeitungswiderstands-Verhältnis haben.

Im Hinblick auf einfachere Verarbeitbarkeit und schnelle Freigabe von Strassenbaustellen sind diese bisher erzielten Temperatursenkungen noch nicht zufriedenstellend.

Der Erfindung liegt deshalb die Aufgabe zugrunde, eine wesentliche Erniedrigung der Verarbeitungstemperatur bei gleichzeitig ausreichender Standfestigkeit, insbesondere Resistenz gegen Spurrinnenbildung, zu erzielen.

Erfindungsgemäss wird dies erreicht durch die im kennzeichnenden Teil der Ansprüche angegebenen Merkmale.

Es wurde nämlich überraschend gefunden, dass mit den bekannten Methoden das Temperaturabsenkungspotential von allen Wachsbindemitteln nicht erschöpft wird.

In bestimmten Fällen ergibt normale Dosierung von wachsmodifizierten Bindemitteln oder Wachs zusätzlich zum normalen Bindemittel Beläge mit besserer Resistenz gegen Spurrinnenbildung und gleichen oder leicht besseren Verarbeitbarkeit (bis 10°C tiefere Verarbeitungstemperatur).

Dies kann mit verschiedenen organischen Verbindungen mit einem Schmelzpunkt zwischen 85°C und 170°C erreicht werden, z.B. Pololefinwachse und deren Oxidate, EVA und andere Copolymerwachse, FT-Paraffine und deren Oxidate, Fettsäureamid wie Licomont BS 100 oder Montanwachs. Die Wachsdosierung kann je nach organischer Verbindung von 1-15% des Bindemittels variieren. Mit der höheren Bindemitteldosierung wird die Verarbeitbarkeit so verbessert, dass wesentlich höhere Temperaturabsenkungen (20-140°C, aber in der Praxis meist 20-60°C) erzielt werden können. Dies gilt auch für wachsmodifizierte Bindemittel aus Polymerbitumen.

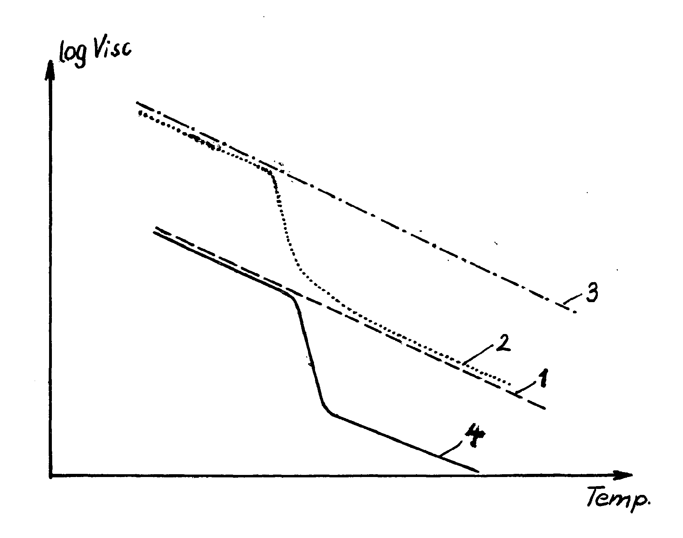

In der beiliegenden Figur ist die Temperaturabhängigkeit der Viskosität verschiedener Asphalttypen ohne und mit Wachszugabe zum Bindemittel vereinfacht qualitativ dargestellt, wobei die Kurven für den Asphalt mit wachsmodifiziertem Bindemittel aus dem Temperaturverhalten des Bindemittels abgeleitet sind. Die Ordinate gibt log Viskosität, die Abszisse die Temperatur an. Die gestrichelte Linie 1 zeigt die Temperaturabhängigkeit eines Asphalts mit dem bekannten Strassenbaubitumen B50/70, die strichpunktierte Linie 3 darüber diejenige von Asphalt mit sog. Hartbitumen (z.B. "BP Struktur"). Die gepunktete Kurve 2 zeigt die Temperaturabhängigkeit von Asphalt mit wachsmodifiziertem Strassenbaubitumen B50/70. Wie ersichtlich verläuft diese Kurve bei den höheren Verarbeitungstemperaturen in der Nähe des normalen Asphalts mit B50/70, erlaubt also die Verarbeitung bei etwa gleichen Temperaturen. Im tieferen Temperaturbereich wird durch die Wachszugabe die Gebrauchsqualität von Asphalt mit Hartbitumen erreicht.

Die durchgezogene Kurve 4 zeigt die Temperaturabhängigkeit eines Asphalts mit einem höheren Anteil an wachsmodifiziertem B50/70. Es ist ersichtlich, dass für diesen Asphalt bei gleicher Viskosität, d.h. also gleicher Standfestigkeit im Gebrauchstemperaturbereich die Temperatur, bei der die Viskosität des Asphalts dessen Verarbeitung erlaubt, wesentlich niedriger ist.

Im Folgenden werden die in der Figur qualitativ gezeigten Ergebnisse durch Beispiele zahlenmässig erhärtet.

### Beispiel 1

Wachszusatz führt nicht zu tieferem Hohlraumgehalt (Tabelle 1, Vergleich Versuch 3 mit Versuchen 2, 4 oder 6). Hingegen mit höherem Bindemittelgehalt wird der Hohlraumgehalt tiefer (Tabelle 1; Vergleich Versuch 1 oder 5 mit Versuch 2,3,4 oder 6). Mit höherem Bindemittelgehalt kann der gleiche Hohlraumgehalt bei tieferer Verdichtungstemperatur erreicht werden (Tabelle 1; Vergleich z.B. Versuch 1 mit Verdichtungstemperatur 160°C und Versuch 2 mit Verdichtungstemperatur 110°C).
Normalerweise führt höherer Bindemittelgehalt zu tieferer Standfestigkeit (Tabelle 2; Vergleich Versuch 5 und 7). Der Asphalt mit Wachszusatz hat aber, trotz tieferer Verdichtungstemperatur, gleiche Standfestigkeit wie der Asphalt ohne Wachszusatz (Tabelle 2; Vergleich Versuch 5 und 6).

**Tabelle 1: Hohlraum in Volumen% von Mischgut ACT 22 laut SN640 431-1. Immer die gleiche Korngrössenverteilung. Bei verschiedenem Bindemittelgehalt, Bindemitteltyp und unterschiedlicher Verdichtungstemperaturen.**

| | | | Verdichtungstemperatur (°C) | | | | |
|---|---|---|---|---|---|---|---|
| Versuch Nr. | Bindemittelgehalt % | Bindemitteltyp | 110 | 120 | 130 | 140 | 160 |
| 1 | 4.1 | B50/70 | 9.8 | 9.5 | 7.7 | 7.6 | 6.4 |
| 2 | 4.6 | B50/70+Wachs | 6.0 | 5.4 | 4.9 | 4.2 | 3.8 |
| 3 | 4.6 | B50/70 | 6.9 | | | | 3.3 |
| 4 | 4.6 | B50/70+Wachs | 7.1 | | | | 3.3 |
| 5 | 4.1 | B50/70 | | | | | 6.0 |
| 6 | 4.6 | B50/70+Wachs | 7.4 | | 4.9 | | |

**Tabelle 2: Druckschwellversuch laut "TP-A-StB Teil: Einaxialer Druckschwellversuch- Bestimmung des Verformungsverhaltens von Walzasphalten bei Wärme"**

| | B50/70 | B50/70 | B50/70+Wachs |
|---|---|---|---|
| Versuchsnummer | 5 | 7 | 6 |
| Bindemittelgehalt (%) | 4.1 | 4.5 | 4.6 |
| Verdichtungstemperatur (°C) | 160 | 145 | 130 |
| Hohlraumgehalt (Volumen %) | 6.0 | 4.5 | 4.9 |
| Steigung im Wendepunkt (Promille pro 10'000 Zyklen) | 1 | 45 | 0.6 |

### Beispiel 2

Mit höherem Bindemittelgehalt sinkt der Rührwiderstand (Tabelle 3; Vergleich Versuch 9 und 10). Mit höherem Bindemittelgehalt kann also bei tieferer Temperatur gearbeitet werden. Gleichzeitig sinkt aber die Standfestigkeit: der Belag hat eine höhere Stempeleindringtiefe (Tabelle 3; Vergleich Versuch 9 und 10). Der Asphalt mit Wachs hat dank diesem Zusatz und höherer Dosierung eine tiefere Verarbeitungstemperatur und trotzdem gleiche Standfestigkeit wie normaler Asphalt (Tabelle 3; Vergleich Versuch 8 und 10).

**Tabelle 3: Rührwiderstand und Standfestigkeit von Gussasphalt MA 11 laut SN 640441 NA. Immer die gleiche Korngrössenverteilung. Verschiedener Bindemittelgehalt und Bindemitteltyp.**

| Versuch Nr. | Bindemittel | Bindemittelgehalt in Gussasphalt (%) | Rührwiderstand (Nm) | | | Stempeleindringtiefe 40°C, 30 min, 500 N/mm2 (mm) |
|---|---|---|---|---|---|---|
| | | | 180°C | 210°C | 240°C | |
| 8 | B30/50 | 7.1 | 8.4 | 7.7 | 6.8 | 0.96 |
| 9 | B50/70 + Wachs | 7.4 | 7.8 | 7.2 | 5.5 | 0.62 |
| 10 | B50/70 + Wachs | 7.7 | 7.4 | 6 | 4.1 | 0.8 |

Die Vorteile des erfindungsgemässen Verfahrens liegen entweder in einer tieferen Verarbeitungstemperatur bei unverändertem Verarbeitungswiderstand oder in der Reduktion des Verarbeitungswiderstands bei unveränderter Temperatur. Tiefe Temperaturen schonen die Bindemittel, insbesondere diejenigen, welche zusätzlich thermisch labile Elastomere enthalten, schützen Arbeiter vor potentiell gesundheitsschädlichen Dämpfen und vor hohen Temperaturen allgemein, verkürzen die Abkühlzeit und ermöglichen damit die rasche Freigabe von Baustellen, geben die Gewähr einer guten Verarbeitung, auch wenn auf Grund von Logistikproblemen oder der Witterung der Asphalt kälter als üblich ist, und reduzieren schliesslich den Energieverbrauch. Geringerer Verarbeitungswiderstand erlaubt den Einsatz von Walzasphalt nach dem erfindungsgemässen Verfahren, wo wenig verdichtet werden kann, wie z.B. auf Brücken oder engen Räumen. Der geringere Verarbeitungswiderstand erlaubt ebenfalls einen schnellen Einbau und die Erreichung einer besseren Ebenheit von Gussasphalt.

Es wurde ausserdem überraschend gefunden, dass die Verkehrsfreigabe bei höheren Temperaturen als für Asphaltbeläge mit Normalbitumen erfolgen kann. Die Freigabetemperatur kann ohne Risiko für Verformung vor dem Abkalten um so viel höher gewählt werden, wie der Erweichungspunkt des Wachsbitumens den von Normalbitumen übersteigt.

## Patentansprüche

1. Asphalt aus einer Mischung von Gesteinskörnungen mit einem wachsmodifizierten Bitumen als Bindemittel, **dadurch gekennzeichnet, dass** der Bindemittelgehalt des Asphalts gegenüber einem Asphalt mit unmodifiziertem Bitumen erhöht ist, derart, dass eine im Vergleich zu unmodifiziertem Bindemittel tiefere Verarbeitungstemperatur oder ein tieferer Verarbeitungswiderstand resultiert.

2. Asphalt nach Anspruch 1, **dadurch gekennzeichnet, dass** er eine im Wesentlichen gleiche oder höhere Resistenz gegen Spurrinnenbildung wie ein Asphalt mit unmodifiziertem Bindemittel besitzt.

3. Asphalt nach einem der Ansprüche 1 - 2, **dadurch gekennzeichnet, dass** der Gehalt an wachsmodifiziertem Bindemittel um mindestens 0,3 Massenprozent erhöht ist.

4. Asphalt nach Anspruch 3, **dadurch gekennzeichnet, dass** der Gehalt an wachsmodifiziertem Bindemittel um mindestens 0,2 Massenprozent erhöht ist.

5. Asphalt nach einem der Ansprüche 1 - 4, **dadurch gekennzeichnet, dass** der Asphalt ein Walzasphalt ist.

6. Asphalt nach einem der Ansprüche 1 - 4, **dadurch gekennzeichnet, dass** der Asphalt ein Gussasphalt ist.

7. Asphalt nach einem der Ansprüche 1 - 6, **dadurch gekennzeichnet, dass** das Bindemittel ein wachsmodifiziertes Polymerbitumen ist.

8. Asphalt nach einem der Ansprüche 1 - 7, **dadurch gekennzeichnet, dass** das Wachs ein FT-Paraffin, ein oxidiertes FT-Paraffin oder ein Fettsäureamid ist.

9. Verfahren zur Herstellung von Asphalt oder Asphaltbelägen, **dadurch gekennzeichnet, dass** ein Asphalt nach einem der Ansprüche 1 - 8 verwendet wird.
